# EUROPÄISCHE PATENTANMELDUNG

(11) **EP 3 715 689 A1**
(43) Veröffentlichungstag der Anmeldung: **30.09.2020**
(21) Anmeldenummer: 20165574.3
(22) Anmeldetag: 25.03.2020
(51) Int. Cl.: F16K 37/00

(54) **VERFAHREN ZUR UEBERWACHUNG DES ZUSTANDS VON MEMBRANVENTILEN**

(30) Priorität: 29.03.2019 DE 102019002293; 24.03.2020 DE 102020108085
(71) Anmelder: KSB SE & Co. KGaA, 67227 Frankenthal (DE)
(72) Erfinder: THOME, Patrick, 67227 Frankenthal (DE)

(57) **Zusammenfassung**

Verfahren zur Überwachung des Zustands von Membranventilen (1), wobei ein von dem Membranventil (1) erzeugtes akustisches Signal (2) mittels einer Detektionseinheit (3) erfasst und an eine Auswerteeinheit (4) übermittelt wird, wobei die Auswerteeinheit (4) das akustische Signal (2) mit einem Referenzsignal vergleicht und Abweichungen zwischen dem akustischen Signal (2) und dem Referenzsignal bestimmt, wobei die Abweichungen an eine Ausgabeeinheit (6) übergeben werden.

## Beschreibung

Die Erfindung betrifft ein Verfahren zur Überwachung des Zustands von Membranventilen.

Membranventile werden in vielfältigsten Anwendungsbereichen dazu genutzt, um den Volumenstrom von Gasen oder Flüssigkeiten zu steuern oder zu regeln. Hierbei ist die Besonderheit, dass Membranventile eine innenliegende Membrane aufweisen, über die das Ventil abgedichtet wird bzw. über die der effektive Strömungsquerschnitt gezielt eingestellt werden kann. Die Membran wird hierzu über ein Druckstück über eine vergleichsweise kleine Strecke bewegt. Der Dichtsteg kommt hierbei der Membrane entgegen. Das Betriebsmedium berührt lediglich die Membranoberfläche. Alle mechanischen Teile liegen außerhalb des medienbenetzten Raumes.

Aufgrund dieses Prinzips weisen Membranventile nur sehr geringe Toträume auf, in denen bzw. an denen sich Bestandteile des Betriebsmediums ablagern können. Somit eigenen sich derartige Ventile insbesondere für hochviskose oder hochhaftfähige Flüssigkeiten. Dies gilt gleichermaßen auch für Flüssigkeiten mit darüber transportierten Feststoffen wie beispielsweise Schmutzwasser. Ohne die Membran könnten sich die Feststoffe unter anderem an dem Dichtsteg ablagern und hierdurch die Funktionsfähigkeit des Ventils einschränken. Vor diesem Hintergrund ist es von entscheidender Bedeutung, dass die innenliegende Membran stets die oben beschriebene Funktion erfüllt bzw. dass im Falle einer undichten Membran ein zügiger Austausch erfolgt.

Derartige Beschädigungen können aber während des Betriebs des Ventils üblicherweise von außen nicht ohne Weiteres festgestellt werden. Dies hat zur Folge, dass die Anlage, in der das Membranventil verbaut ist, zunächst stillgelegt werden muss und anschließend ein Ausbau des Ventils erfolgt.

Dies geschieht üblicherweise im Rahmen allgemeiner Wartungsarbeiten, bei denen die Membran nach einer festgelegten Betriebszeit ausgetauscht wird. Diese Betriebszeit beruhte zumeist auf Erfahrungswerten und orientiert sich nicht daran, ob ein solcher Austausch überhaupt notwendig ist. Dementsprechend ist es möglich, dass ein Ausbau des Ventils erfolgt, obwohl dieses noch immer funktionsfähig ist. Entsprechend kann es auch vorkommen, dass bereits beschädigte Membranen bis zum Ablauf der festgelegten Betriebszeit weiterhin in Betrieb bleiben.

In der Praxis haben sich daher Verfahren herausgebildet, bei denen über die Messung einzelner Betriebsparameter, wie Druck oder Volumenstrom, versucht wird, eine Aussage über den Zustand des Membranventils zu treffen. Diese Verfahren sind aber insgesamt aufwendig und fehleranfällig.

Der vorliegenden Erfindung liegt daher die Aufgabe zugrunde, ein Verfahren anzugeben, das in einfacher Art und Weise den Zustand eines Membranventils überwacht.

Diese Aufgabe wird gelöst durch ein Verfahren gemäß Anspruch 1. Erfindungsgemäß wird der Zustands eines Membranventils dadurch überwacht, dass zunächst ein von dem Membranventil erzeugtes akustisches Signal mittels einer Detektionseinheit erfasst und an eine Auswerteeinheit übermittelt wird. Anschließend vergleicht die Auswerteeinheit das akustische Signal mit einem Referenzsignal und bestimmt Abweichungen zwischen dem akustischen Signal und dem Referenzsignal. Im Anschluss werden die Abweichungen an eine Ausgabeeinheit übermittelt.

Hierbei geht die Erfindung von der Erkenntnis aus, dass das Membranventil während des Betriebs ein bestimmtes Geräuschprofil verursacht. Dieses Geräuschprofil entsteht insbesondere durch das Zusammenwirken zwischen dem strömenden Betriebsmedium und dem von dem Betriebsmedium durchströmten Kanal innerhalb des Ventils. Dieses Geräuschprofil ist somit abhängig sowohl von den Betriebsparametern als auch von der konstruktiven Ausgestaltung des Ventils.

Somit reicht erfindungsgemäß allein ein Durchströmen des Bauteils aus, um Aussagen bzgl. des Membranzustandes treffen zu können. Eine zum Zwecke der Emittierung eines Geräuschmusters aktiv hervorgerufene Änderung eines Zustandes des Bauteils, wie z.B. ein Umschalten, ein Öffnen bzw. Schließen ist nicht notwendig. Erfindungsgemäß vergleicht die Auswerteeinheit das durch das Durchströmen des Bauteils bedingte akustische Signal mit einem Referenzsignal und bestimmt Abweichungen zwischen dem akustischen Signal und dem Referenzsignal. Insofern erfolgt bei der Erfindung die Überwachung der Membran ohne jegliche aktive Beeinflussung, d.h. ohne aktive Änderung des Zustandes des Bauteils und vollkommen nicht-invasiv. Dadurch ist eine einfache und eingriffsfreie Zustandsüberwachung ermöglicht.

Für jedes Ventil kann daher ein Referenzsignal beispielsweise in Form eines Referenzgeräuschprofils ermittelt werden, das die Geräuschentwicklung in einem unbeschädigten Zustand des Ventils beschreibt. Sofern beispielsweise die innenliegende Membran beschädigt wird, führt dies zu einer Änderung in dem akustischen Signal bzw. in dem ermittelten Geräuschprofil. Die Auswerteeinheit kann diese akustische Abweichung durch einen Vergleich mit dem Referenzsignal bestimmen und über eine Ausgabeeinheit an den Benutzer ausgeben. Dieser kann dann aufgrund der ermittelten Informationen entscheiden, ob ein Austausch der innenliegenden Membran erforderlich ist. Zugleich kann auch eine Abschätzung der Restlebensdauer des Membranventils durchgeführt werden.

Der wesentliche Vorteil gegenüber den bereits bekannten Verfahren besteht darin, dass einerseits eine nicht-invasive Messung erfolgt und andererseits der Aufbau eines entsprechenden Überwachungssystems verhältnismäßig einfach ist.

Wie bereits zuvor erläutert, ist das akustische Signal nicht nur abhängig von dem Zustand des Membranventils, sondern auch in einem nicht unwesentlichen Maße von den Betriebsparametern wie z.B. dem Ventilhub oder dem Volumenstrom. Somit wird ein Referenzsignal bevorzugt für verschiedene Betriebsparameterkombinationen ermittelt. In einer bevorzugten Ausgestaltung erfolgt die Erfassung des Referenzsignals bzw. der Referenzsignale vor einem erstmaligen Betrieb des Membranventils. Die Referenzsignale werden sodann an die Auswerteeinheit übermittelt.

Die Überwachung des akustischen Signals erfolgt üblicherweise in einem zuvor festgelegten Frequenzbereich. Für diesen festgelegten Frequenzbereich werden auch die Referenzsignale bestimmt. Bevorzugt sind Frequenzen im Bereich von 0 bis 25 kHz umfasst.

Die Überwachung des Membranventils kann entweder kontinuierlich oder diskontinuierlich zu vorbestimmten Zeitpunkten erfolgen. Eine kontinuierliche Überwachung hat hierbei den Vorteil, dass Änderungen im akustischen Signal frühzeitig erfasst und ausgewertet werden können. Bei einer diskontinuierlichen Überwachung kann eine Änderung erst zum nächstliegenden Zeitpunkt der Messung detektiert werden. Eine kontinuierliche Messung ist darüber hinaus vorteilhaft, da eine größere Breite von Signaländerungen erfasst werden kann. Beispielsweise kann eine Änderung des akustischen Signals darin bestehen, dass bei einer bestimmten Frequenz ebenfalls nur zu bestimmten Zeitpunkten ein wiederkehrendes Signal erzeugt wird. Sofern bei einer diskontinuierlichen Überwachung zu genau diesen Zeitpunkten jedoch keine Messung erfolgt, würde diese Änderung nicht erfasst werden.

Sofern die Auswerteeinheit Abweichungen im akustischen Signal vom Referenzsignal detektiert, erfolgt bevorzugt ein Vergleich mit charakteristischen Abweichungen. Bei diesen charakteristischen Abweichungen handelt es sich um Abweichungen, die mit einem bestimmten Ereignis des Membranventils in Verbindung gebracht werden können. Bei diesen Ereignissen kann es sich sowohl um übliche Betriebsereignisse des Membranventils handeln, aber auch um Beschädigungen oder Fehlfunktionen. Diese Ereignisse und damit auch die damit in Verbindung stehenden charakteristischen Abweichungen beruhen üblicherweise auf Erfahrungswerten. Beispielsweise kann eine charakteristische Abweichung in einer Änderung des Geräuschprofils bestehen.

So kann über ein Geräuschprofil jeder detektierten Frequenz ein Schallpegel zugeordnet werden. Dieser Schallpegel kann in Form eines Kurvenverlaufes sichtbar gemacht werden, wobei dieser Kurvenverlauf bei bestimmten Frequenzen lokale Maxima aufweist. Eine erste charakteristische Abweichung besteht darin, dass zu einem bestimmten Zeitpunkt ein zusätzliches lokales Maximum detektiert wird, welches beispielsweise bei dem Referenzsignal nicht vorhanden ist. Dieses lokale Maximum kann kontinuierlich aber auch diskontinuierlich auftreten.

Eine zweite charakteristische Abweichung besteht in der Frequenzbreite der Maxima. So kann beispielsweise ein Maximum über nur einen sehr kleinen Frequenzbereich aber auch über einen sehr breiten Frequenzbereich verlaufen.

Eine dritte charakteristische Abweichung führt zu einer Änderung bzw. zu Änderungen des Schalldruckpegels. Diese Änderung des Schalldruckpegels erfolgt üblicherweise für einen bestimmten Frequenzbereich, sie kann aber auch mehrere Frequenzbereiche und damit auch mehrere Maxima umfassen.

Damit die Auswerteeinheit in der Lage ist, das akustische Signal mit einem Referenzsignal und eine Abweichung mit einer charakteristischen Abweichung zu vergleichen, weist sie bevorzugt einen Speicher auf, in dem das Referenzsignal, bevorzugt aber auch die charakteristischen Abweichungen hinterlegt sind.

Grundsätzlich ist es hierbei ausreichend, wenn nur das Referenzsignal und charakteristische Abweichungen für das betriebene Membranventil in dem Speicher hinterlegt sind. In einer bevorzugten Ausgestaltung sind in dem Speicher jedoch Referenzsignale und charakteristische Abweichungen für eine Vielzahl von unterschiedlichen Membranventilen hinterlegt, wobei der Benutzer vor Betrieb eines bestimmten Membranventils beispielsweise über eine Eingabeschnittstelle der Auswerteeinheit den jeweiligen Typ auswählt und die Auswerteeinheit ausgehend hiervon, das entsprechende Referenzsignal und/oder die entsprechenden charakteristischen Abweichungen auswählt.

Um den Nutzer darüber informieren zu können, dass eine Abweichung zwischen dem akustischen Signal und dem Referenzsignal vorliegt, ist die Auswerteeinheit mit einer Ausgabeeinheit verbunden. Die Ausgabe erfolgt bevorzugt in Form eines graphischen und/oder auch in Form eines akustischen Ausgabesignals.

Ein graphisches Signal kann beispielsweise darin bestehen, dass die Abweichungen vom Referenzsignal über einen Frequenzbereich graphisch dargestellt werden. Bei einem intakten Membranventil ohne Änderung des Betriebszustandes würde demnach keine Abweichung dargestellt. Neben der graphischen Darstellung der Abweichung wird bevorzugt auch das gemessene akustische Signal ausgegeben. Hierdurch könnte bei einer Abweichung vom Referenzsignal die Abweichung besser interpretiert werden. In einer Weiterbildung wird auch eine charakteristische Abweichung ausgegeben, sofern diese mit einer tatsächlichen Abweichung vom Referenzsignal übereinstimmt. Eine graphische Darstellung umfasst grundsätzlich auch eine Ausgabe von Textmitteilungen, die über Abweichungen und/oder charakteristische Abweichungen informieren.

Eine akustische Ausgabe erfolgt bevorzugt in Form eines Warntones bzw. in Form von Warntönen, die den Benutzer über Abweichungen informieren. Bevorzugt werden diese Warntöne jedoch nur ausgegeben, sofern die Abweichungen einer charakteristischen Abweichung entsprechen. Eine graphische und eine akustische Ausgabe können darüber hinaus auch miteinander kombiniert werden.

Gegenstand der Erfindung ist aber nicht nur ein Verfahren gemäß Anspruch 1 sondern auch ein System zur Durchführung des Verfahrens mit einer Detektionseinheit, einer Auswerteeinheit und einer Ausgabeeinheit. Bei der Detektionseinheit handelt es sich bevorzugt um ein Messmikrofon.

Messmikrofone haben den Vorteil, dass sie akustische Signale objektiv detektieren und an die Auswerteinheit übermitteln können. Grundsätzlich sind aber auch alle anderen Arten von Mikrofonen für dieses Verfahren geeignet. So kann das System beispielsweise auch über ein Smartphone realisiert sein, wobei das im Smartphone integrierte Mikrophon die Detektionseinheit darstellt. Die Auswertung des akustischen Signals erfolgt dann intern im Smartphone, wobei das Ausgabesignal auf dem Display als Ausgabeeinheit angezeigt wird.

Die Erfindung wird im Folgenden anhand einer lediglich ein Ausführungsbeispiel darstellenden Zeichnung erläutert. Es zeigen:
- Fig. 1: ein schematisch dargestelltes System zur Durchführung des erfindungsgemäßen Verfahrens
- Fig. 2: ein exemplarisches Referenzsignal
- Fig. 3A-3C: verschiedene Verläufe des akustischen Signals

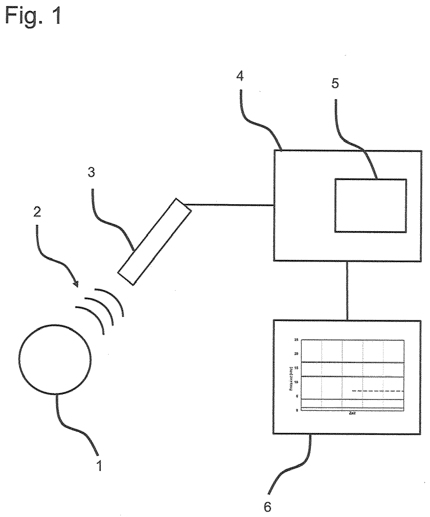

Die Figur 1 zeigt eine schematische Darstellung eines Systems zur Überwachung des Zustands des Membranventils 1. Ein Richtmikrofon 3 ist als Detektionsvorrichtung auf das Membranventil 1 ausgerichtet und detektiert ein von dem Membranventil erzeugtes akustisches Signal 2.

Dieses akustische Signal 2 wird von dem Messmikrofon 3 an eine Auswerteeinheit 4 übertragen und dort ausgewertet. Die Auswerteeinheit 4 weist einen integrierten Speicher 5 auf, in dem ein Referenzsignal gespeichert ist. Dieses Referenzsignal entspricht dem akustischen Signal 2, das von einem intakten Membranventil 1 ausgesandt wird.

In der Auswerteeinheit 4 erfolgt ein Abgleich des von dem Membranventil 1 erzeugten akustischen Signals 2 mit dem im Speicher 5 hinterlegten Referenzsignal. Sofern Abweichungen zwischen dem akustischen Signal 2 und dem Referenzsignal vorliegen, kann dies Aufschluss über den Zustand des Membranventils geben.

Die Abweichungen werden sodann von der Auswerteeinheit 4 an eine Ausgabeeinheit 6 übermittelt, die ausgehend von den Abweichungen ein graphisches Ausgabesignal erzeugt. Im vorliegenden Fall handelt es sich bei dem graphischen Ausgabesignal um eine Darstellung der lokalen Schallpegelmaxima für einen bestimmten Frequenzbereich, wobei die Abweichungen gestrichelt dargestellt sind.

In dem Speicher 5 sind darüber hinaus auch charakteristische Abweichungen hinterlegt. Es handelt sich hierbei um Abweichungen, die auf Erfahrungswerten basieren und einem bestimmten Ereignis, wie z.B. einer undichten Membrane, zugeordnet werden können. Sofern die in der Auswerteinheit 4 detektierten Abweichungen mit den charakteristischen Abweichungen identisch sind, erfolgt ebenfalls eine Ausgabe eines graphischen Ausgabesignals, das auf das Vorliegen einer solchen charakteristischen Abweichung hinweist.

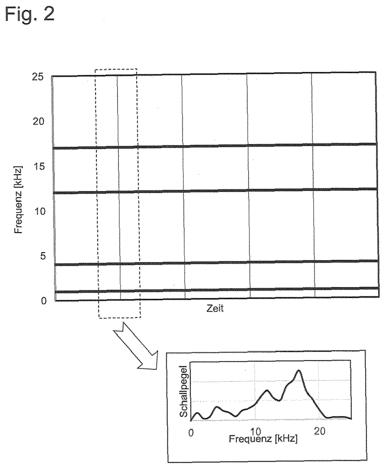

Die Figur 2 zeigt exemplarisch den zeitlichen Verlauf eines akustischen Signals 2, wobei das akustische Signal einem Referenzsignal entspricht. Die horizontalen Linien entsprechen hierbei lokalen Schallpegelmaxima, die bei verschiedenen Frequenzen vorliegen. Besonders deutlich wird dies im Vergleich mit dem unteren Diagramm, das den Schallpegelverlauf zu einem bestimmten Zeitpunkt für verschiedene Frequenzen zeigt. Ausgehend von diesem Verlauf werden insgesamt vier lokale Schallpegelmaxima sichtbar, die aufgrund des zeitlichen Verlaufes in dem oberen Diagramm als Linie dargestellt sind.

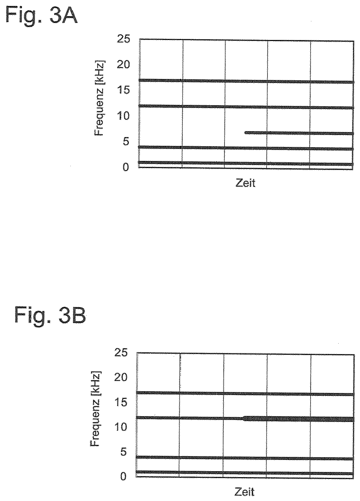

Die Figuren 3A bis 3C zeigen unterschiedliche zeitliche Verläufe des akustischen Signals 2. Hierbei weisen alle Verläufe nach etwa der Hälfte der gemessenen Zeit eine charakteristische Abweichung gegenüber dem Referenzsignal der Figur 2 auf.

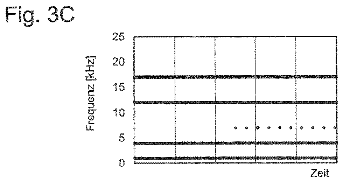

Gemäß der Figur 3A bildet sich ein fünftes lokales Schallpegelmaximum aus, wobei die Frequenz in etwa bei 7 kHz liegt. Dieses lokale Schallpegelmaximum ist kontinuierlich, wobei gemäß der Figur 3C dieses Maximum diskontinuierlich bzw. nur zu bestimmten Zeitpunkten auftritt.

Gemäß der Figur 3B bildet sich kein weiteres Schallpegelmaximum, allerdings verläuft das Maximum bei einer mittleren Frequenz von 12 kHz über einen im Vergleich zum Referenzsignal breiteren Frequenzbereich.

## Patentansprüche

1. Verfahren zur Überwachung des Zustands von Membranventilen (1), wobei ein von dem Membranventil (1) erzeugtes akustisches Signal (2) mittels einer Detektionseinheit (3) erfasst und an eine Auswerteeinheit (4) übermittelt wird, wobei die Auswerteeinheit (4) das akustische Signal (2) mit einem Referenzsignal vergleicht und Abweichungen zwischen dem akustischen Signal (2) und dem Referenzsignal bestimmt, wobei die Abweichungen an eine Ausgabeeinheit (6) übergeben werden.

2. Verfahren nach Anspruch 1, wobei das Referenzsignal vor dem erstmaligen Betrieb des Membranventils (1) erfasst und an die Auswerteeinheit (4) übermittelt wird.

3. Verfahren nach Anspruch 1 oder 2, wobei das Referenzsignal und das akustische Signal (2) einen vorbestimmten Frequenzbereich z.B. von 0 bis 25 kHz umfassen.

4. Verfahren nach einem der Ansprüche 1 bis 3, wobei die Überwachung kontinuierlich während des Betriebs des Membranventils (1) erfolgt oder zu vorbestimmten Zeitpunkten.

5. Verfahren nach einem der Ansprüche 1 bis 4, wobei die Auswerteeinheit (4) die Abweichungen mit charakteristischen Abweichungen vergleicht.

6. Verfahren nach Anspruch 5, wobei die charakteristischen Abweichungen eine Änderung des Frequenzprofils und/oder eine Änderung des Schallpegels sind.

7. Verfahren nach einem der Ansprüche 1 bis 6, wobei die charakteristischen Abweichungen kontinuierlich und/oder diskontinuierlich sind.

8. Verfahren nach einem der Ansprüche 1 bis 7, wobei das Referenzsignal und/oder die charakteristischen Abweichungen in einem Speicher (5) der Auswerteeinheit (4) gespeichert sind.

9. Verfahren nach Anspruch 8, wobei eine Vielzahl von Referenzsignalen und/oder eine Vielzahl von charakteristischen Abweichungen für unterschiedliche Arten von Membranventilen (1) in dem Speicher (5) der Auswerteeinheit (4) gespeichert sind.

10. Verfahren nach einem der Ansprüche 1 bis 9, wobei die Ausgabeeinheit (6) die Abweichungen und/oder die charakteristischen Abweichungen in Form eines graphischen und/oder akustischen Ausgabesignals ausgibt.

11. System zur Durchführung eines Verfahrens nach einem der Ansprüche 1 bis 10 mit einer Detektionseinheit (3), mit einer Auswerteeinheit (4) und einer Ausgabeeinheit (6).

12. System nach Anspruch 11, wobei die Detektionseinheit (6) ein Messmikrofon ist.
